# EUROPÄISCHE PATENTSCHRIFT

(11) **EP 0 552 163 B1**
(45) Veröffentlichungstag und Bekanntmachung des Hinweises auf die Patenterteilung: **17.01.1996**
(21) Anmeldenummer: 91914133.3
(22) Anmeldetag: 03.08.1991
(51) Int. Cl.: E04H 6/24, B65G 1/04

(54) **PARKVORRICHTUNG FÜR KRAFTFAHRZEUGE**
PARKING DEVICE FOR MOTOR VEHICLES
DISPOSITIF DE STATIONNEMENT DE VEHICULES A MOTEUR

(30) Priorität: 13.10.1990 DE 4032529
(43) Veröffentlichungstag der Anmeldung: 28.07.1993
(73) Patentinhaber: OTTO WÖHR GMBH, D-70825 Korntal-Münchingen (DE)
(72) Erfinder: GANSER, Anton, D-7964 Kisslegg (DE)
(74) Vertreter: Hoeger, Stellrecht & Partner
(86) Internationale Anmeldenummer: EP9101469
(87) Internationale Veröffentlichungsnummer: WO9207153

(56) Entgegenhaltungen:
- EP-A- 0 338 603
- FR-A- 2 138 491
- GB-A- 996 224
- GB-A- 1 064 898
- US-A- 2 712 875
- US-A- 2 864 515

## Beschreibung

Die Erfindung betrifft eine Parkvorrichtung für Kraftfahrzeuge mit mehreren übereinander angeordneten Aufnahmen für Parkpaletten, mit einem den Aufnahmen benachbarten, jeweils in der Höhe einer Aufnahme arretierbaren Aufzug und mit einem jeweils eine Parkpalette vom Aufzug auf die benachbarte Aufnahme oder in umgekehrter Richtung bewegenden Antrieb, mit einer Brücke zur Überbrückung des Spaltes zwischen Aufzug und benachbarter Aufnahme, die zwischen einer Ruheposition, in der sie die Bewegung des Aufzuges relativ zu den Aufnahmen nicht behindert, und einer Arbeitsposition bewegbar ist, in der sie den Spalt zwischen dem arretierbaren Aufzug und der benachbarten Aufnahme überbrückt.

Parkvorrichtungen dieser Art ermöglichen es, eine größere Anzahl von Kraftfahrzeugen übereinander abzustellen, wobei jedes Kraftfahrzeug auf einer eigenen Parkpalette steht, die zusammen mit dem Kraftfahrzeug bewegbar ist. Um diese Parkpaletten in die jeweilige Aufnahmeposition beziehungsweise in die Ein- und Ausfahrposition der Kraftfahrzeuge zu bringen, ist ein längs der Aufnahmen in senkrechter Richtung bewegbarer Aufzug vorgesehen. Von diesem Aufzug können Parkpaletten auf die benachbarten Aufnahmen verschoben werden und umgekehrt.

Dabei ergeben sich in der Praxis Schwierigkeiten durch Fertigungstoleranzen, durch thermische Ausdehnung und ähnliche Effekte, die dazu führen, daß zwischen der Aufnahme und dem Aufzug unterschiedlich große Spalte und gegebenenfalls auch Stufen auftreten, die die Verschiebung der Parkpalette von der Aufnahme auf den Aufzug und umgekehrt erschweren.

Diese Schwierigkeiten lassen sich teilweise dadurch vermeiden, daß zwischen dem Aufzug und den Aufnahmen Brücken vorgesehen werden, die den Zwischenraum zwischen Aufzug und Aufnahme schließen. Eine derartige Vorrichtung ist beispielsweise aus der GB-A-996224 bekannt. Allerdings schlägt dort eine verschwenkbar an den einzelnen Aufnahmen gelagerte Brücke bei jedem Vorbeifahren des Aufzuges an diesem an und wird von diesem verschwenkt, so daß in diesem Bereich ein hoher Verschleiß auftritt.

Es ist Aufgabe der Erfindung, eine gattungsgemäße Parkvorrichtung so zu verbessern, daß in allen Fällen eine einwandfreie Übergabe der Parkpalette vom Aufzug auf die Aufnahme und umgekehrt möglich ist, ohne daß dabei ein übermäßiger Verschleiß auftritt.

Diese Aufgabe wird bei einer Parkvorrichtung der eingangs beschriebenen Art erfindungsgemäß dadurch gelöst, daß eine Betätigungsvorrichtung für die Brücke an dem Aufzug angeordnet ist, daß die Brücke an der Aufnahme gelagert ist und in der Arbeitsposition in die Bewegungsbahn des Aufzuges hineinragt und daß die Betätigungsvorrichtung einen ausfahrbaren Mitnehmer aufweist, der sich in der ausgefahrenen Stellung an ein die Brücke bewegendes, an der Aufnahme gehaltenes Mitnahmeteil anlegt und dieses durch die Bewegung des Aufzuges verschiebt.

Auf diese Weise wird sichergestellt, daß der Aufzug an allen Aufnahmen, an denen er vorbeifahren soll, keinerlei Kontakt mit den dort gelagerten Brücken hat, während die Brücke nur an der Aufnahme von der Betätigungsvorrichtung betätigt wird, die vom Aufzug angefahren werden soll. Vorteilhaft ist dabei, daß nur eine einzige Betätigungsvorrichtung benötigt wird, auch wenn gegebenenfalls in mehreren Etagen Brücken an Aufnahmen zu betätigen sind. Es ist weiterhin günstig, daß die Aufzugsbewegung zur Verschiebung der Brücke ausgenützt wird, denn es ist lediglich notwendig, kurz vor Erreichen der gewünschten Aufnahme den Mitnehmer an dem Aufzug auszufahren, dies kann mit einem Motor geringer Leistung erfolgen.

Besonders vorteilhaft ist es, wenn die Brücke in der Arbeitsstellung so fixiert ist, daß sich der arretierte Aufzug über die Brücke an der Aufnahme abstützt. Damit übernehmen die Brücken nicht nur die Funktion, den Spalt zwischen Aufzug und Aufnahme zu überbrücken, sondern sie tragen auch den Aufzug in der Übergabestellung, das heißt der Aufzug befindet sich in diesem Fall in einer genau fixierten Position, die relativ zur Fahrbahn der Aufnahme exakt definiert ist, so daß die Übergabe behindernde Stufen nicht auftreten können.

Günstig ist es, wenn das Mitnahmeteil die Brücke nur soweit verschiebt, bis sie in die Bewegungsbahn des Aufzuges eintaucht, und wenn der Aufzug selbst die Brücke danach bis in eine Endstellung bewegt, in der die Bewegung der Brücke durch einen Anschlag begrenzt ist. So kann beispielsweise die Brücke nur teilweise eingeschwenkt werden, der Aufzug legt sich dann auf die teilweise eingeschwenkte Brücke und verschwenkt diese vollends in die Endstellung, in der der Aufzug auf der Brücke aufruht.

Die Brücke kann gegen die Wirkung einer Feder und/oder einer Gewichtskraft in die Arbeitsstellung bewegbar sein, so daß nach Entfernung des Aufzuges die Brücke selbsttätig in die Ruhestellung gelangt.

Trotzdem ist es günstig, wenn der Mitnehmer beim Entfernen des Aufzuges von der Aufnahme am Mitnahmeteil zur Anlage kommt und durch die Bewegung des Aufzuges über das Mitnahmeteil die Brücke in die Ruhestellung verschiebt. Es ist dadurch gewährleistet, daß nach dem Verlassen einer Aufnahme in jedem Fall die Brücke aus der Fahrbahn des Aufzuges ausgeschwenkt ist.

Der Mitnehmer kann beispielsweise ein ausschwenkbar am Aufzug gelagerter Hebel sein.

Günstig ist es, wenn das Mitnahmeteil eine mit der Brücke verbundene Kurvenbahn ist, vorzugsweise trägt der Mitnehmer eine an die Kurvenbahn anlegbare Rolle.

Bei einer weiteren bevorzugten Ausführungsform ist vorgesehen, daß in der Aufnahme ein Verriegelungselement zur Sicherung einer aufliegenden Parkpalette angeordnet ist, welches zusammen mit der Brücke bewegbar ist. Befindet sich die Brücke in der Ruhestellung, ist die Parkpalette auf der Aufnahme verriegelt und damit gegen jede Verschiebung gesichert, gleichzeitig mit der Bewegung der Brücke in die Arbeitsstellung wird auch das Verriegelungselement gelöst und gibt die Plattform für die Verschiebung auf den Aufzug frei.

Das Verriegelungselement kann ein in senkrechter Richtung verschiebbarer Stift sein, der in der Verriegelungsstellung in eine Ausnehmung der Parkpalette eingreift.

Eine besonders vorteilhafte Anordnung der Parkvorrichtung ergibt sich, wenn auf gegenüberliegenden Seiten des Aufzuges jeweils mindestens eine Brücke angeordnet ist. Die vom Aufzug transportierte Parkpalette kann damit nach gegenüberliegenden Seiten auf eine benachbarte Aufnahme abgeschoben werden.

Es ist weiterhin vorteilhaft, wenn für jede Parkpalette zwei parallel verlaufende Fahrbahnen mit jeweils einer Brücke vorgesehen sind.

Jeder Brücke ist vorzugsweise ein die Brückenposition überwachender Sensor zugeordnet, der einer zentralen Steuerung Signale zuführt, die der jeweiligen Position der Brücken entsprechen. Auf diese Weise kann sichergestellt sein, daß beim Ausfall einer Brücke die gesamte Anlage abgeschaltet und eine Störmeldung abgegeben wird.

Günstig ist es weiterhin, wenn der Antrieb für die Verschiebung der Parkpaletten am Aufzug angeordnet ist; es ist dann nur ein einziger Antrieb zur Verschiebung der Parkpaletten in allen Etagen notwendig.

Dieser Antrieb kann beispielsweise einen Mitnehmer umfassen, der auf einer horizontalen Kreisbahn bewegbar ist, die über den Aufzug hervorsteht und deren Durchmesser größer ist als der Verschiebeweg der Parkpalette, wobei an der Parkpalette ein Anschlag für den Mitnehmer vorgesehen ist, der sich quer zur Verschieberichtung der Parkpalette bis zu dem am weitesten über den Aufzug hervorstehenden Teil der Kreisbahn erstreckt, und wobei der Anschlag auf gegenüberliegenden Seiten des Mitnehmers anliegt. Die Bewegung des Mitnehmers längs der Kreisbahn führt dann zu einem Eingreifen in den doppelt wirkenden Anschlag und bei weiterer Bewegung in eine Mitnahme der Parkpalette von der Aufnahme auf den Aufzug. Auf dem Aufzug selbst bleibt der Mitnehmer im Eingriff mit dem doppelt wirkenden Anschlag und sichert somit die Parkpalette auf dem Aufzug. Die Verschiebung vom Aufzug auf die Aufnahme erfolgt in umgekehrter Reihenfolge, wobei nach Erreichen der Endposition der Parkpalette auf der Aufnahme der Mitnehmer aus dem doppelt wirkenden Anschlag seitlich austritt.

Der Anschlag kann insbesondere als nach unten und zur Seite hin offene Schiene mit U- oder C-Profil ausgebildet sein.

Günstig ist es, wenn die Kreisbahn auf gegenüberliegenden Seiten des Aufzuges in gleicher Weise hervorsteht, so daß mit demselben Mitnehmer eine Verschiebung der Parkpaletten nach beiden Seiten des Aufzuges möglich ist, das heißt die Parkpaletten können vom Aufzug wahlweise entweder auf die eine Aufnahme oder auf die gegenüberliegende Aufnahme geschoben werden.

Die nachfolgende Beschreibung bevorzugter Ausführungsformen der Erfindung dient im Zusammenhang mit der Zeichnung der näheren Erläuterung. Es zeigen:
- Figur 1 :: eine schematische Seitenansicht einer Parkvorrichtung mit mehreren übereinander angeordneten Aufnahmen und einem dazwischen senkrecht verfahrbaren Aufzug;
- Figur 2 :: eine Ansicht des Aufzuges von der Oberseite her;
- Figur 3 :: eine Seitenansicht einer den Aufzug mit einer Aufnahme verbindenden Brücke beim Verfahren des Aufzuges in Abwärtsrichtung und
- Figur 4 :: eine Ansicht ähnlich Figur 3 beim Verfahren des Aufzuges in Aufwärtsrichtung.

Die in der Zeichnung dargestellte Parkvorrichtung kann beispielsweise in einem Kellergeschoß oder einem anderen zu Parkzwecken geeigneten Gebäude angeordnet sein. Sie umfaßt zwei im Abstand zueinander angeordnete Rahmengestelle 1, die eine Anzahl von übereinanderliegenden, parallelen Aufnahmen 2 für Parkpaletten 3 bilden. Die Aufnahmen 2 können als ebene Fläche ausgebildet sein oder die Form von zwei parallelen Schienen haben, auf denen die Parkpaletten 3 auf Rädern 4 verfahrbar sind.

Die Parkpaletten 3 sind in an sich bekannter Weise Plattformen, die zur Aufnahme eines Kraftfahrzeuges geeignet sind und die als selbständige, wagenähnliche Einheiten zusammen mit den auf sie abgestellten Kraftfahrzeugen verfahrbar sind. Auf jede Aufnahme 2 kann eine Parkpalette 3 geschoben werden, der Abstand zur nächsthöheren Aufnahme ist so groß, daß eine Parkpalette mit darauf abgestelltem Kraftfahrzeug eingeschoben werden kann.

Die Rahmengestelle 1 mit den Aufnahmen 2 sind so im Abstand zueinander angeordnet, daß zwischen den beiden Rahmengestellen 1 ein senkrechter Schacht 5 verbleibt, in dem ein Aufzug 6 in senkrechter Richtung verschiebbar ist. Der Aufzug 6 kann beispielsweise an Ketten 7 aufgehängt sein, die durch einen in der Zeichnung nicht dargestellten, geeigneten Antrieb nach oben gezogen beziehungsweise nach unten abgelassen werden können. Der Aufzug 6 weist eine horizontale Plattform 8 auf, die so groß ist, daß sie eine Parkpalette 3 aufnehmen kann. Die Plattform 8 reicht auf beiden Seiten bis dicht an die Rahmengestelle 1 mit ihren Aufnahmen 2 heran. Der Aufzug kann jeweils in der Höhe einer Aufnahme 2 arretiert werden, so daß die Plattform 8 des Aufzuges 6 mit den einander gegenüberliegenden Aufnahmen 2 der beiden Rahmengestelle 1 ausgerichtet ist. Zwischen der Plattform 8 und den benachbarten Aufnahmen 2 bleibt ein Spalt, der einerseits notwendig ist, um das ungehinderte Vorbeifahren des Aufzuges an den Aufnahmen 2 zu ermöglichen, der aber andererseits das Verfahren einer Parkpalette 3 von der Plattform 8 des Aufzuges 6 auf eine benachbarte Aufnahme 2 behindert.

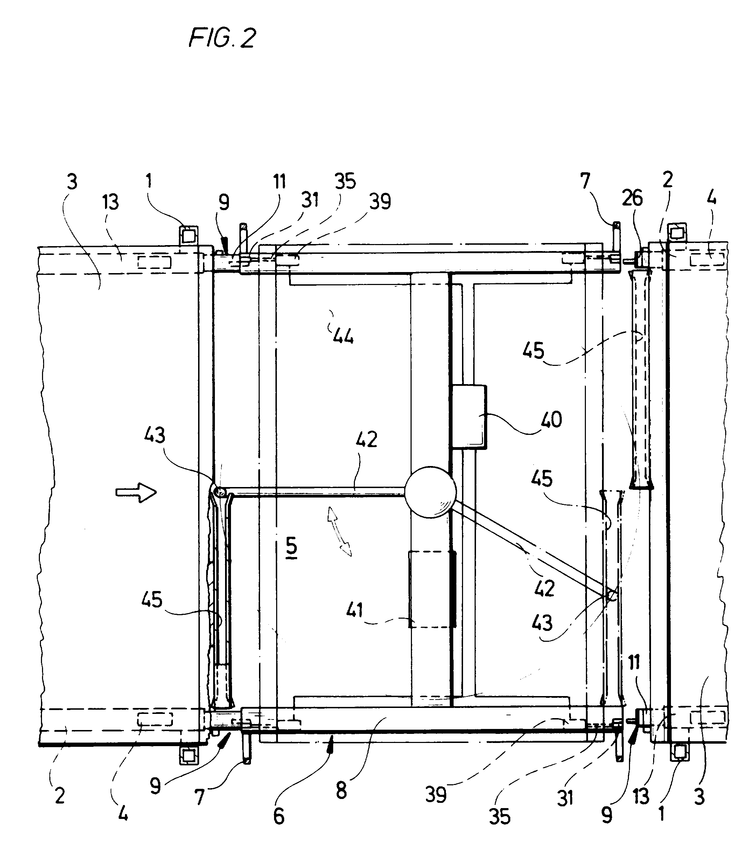

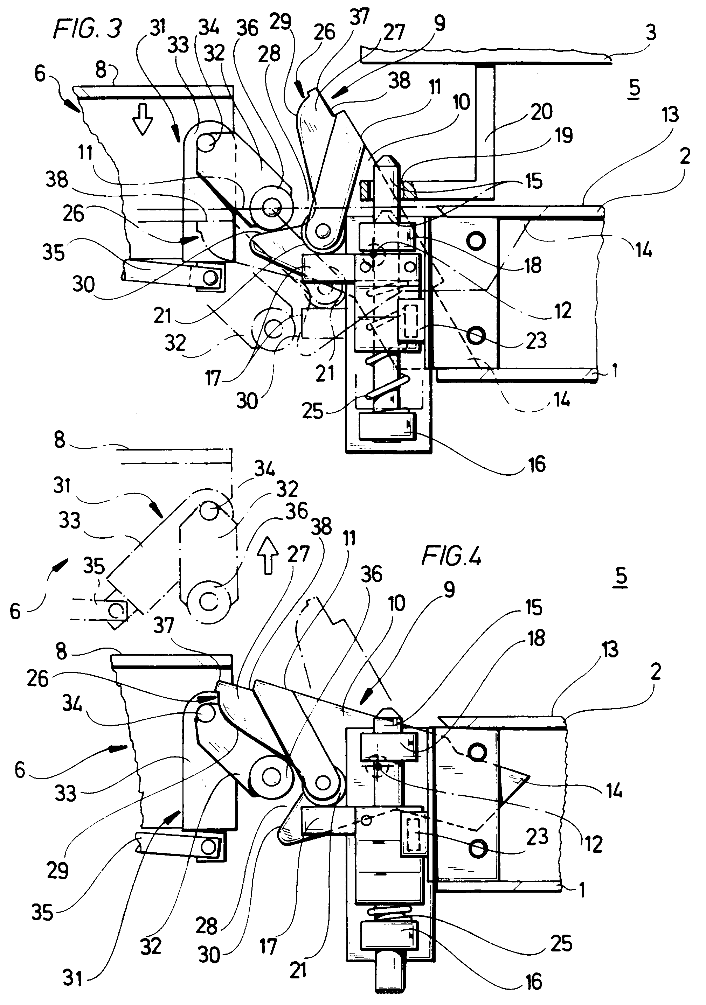

Um hier ein problemloses Verfahren trotz dieser Spalte zu ermöglichen, sind an jeder Aufnahme 2 an der dem Aufzug 6 zugewandten Seiten zwei Brücken 9 verschwenkbar gelagert, die in einer nach oben geschwenkten Ruheposition aus der Bewegungsbahn des Aufzuges 6 ausgeschwenkt sind und die in einer nach unten verschwenkten Arbeitsposition den Spalt zwischen Aufnahme und in der Höhe mit der Aufnahme ausgerichteter Plattform 8 des Aufzuges 6 überbrücken. Diese Brücken 9 werden durch eine am Aufzug 6 angeordnete Betätigungsvorrichtung zwischen Ruheposition und Arbeitsposition hin- und herbewegt, wie dies im folgenden insbesondere anhand der Figuren 3 und 4 detailliert beschrieben wird. Dabei wird nur eine einzige Brücke mit am Aufzug angeordneter Betätigungsvorrichtung erläutert, es versteht sich, daß jede Aufnahme zwei dem Aufzug zugewandte, im Abstand zueinander am Ende der jeweiligen Fahrbahn angeordnete Brücken aufweist, wobei die Aufnahmen an den beiden im Abstand zueinander angeordneten Rahmengestellen 1 in derselben Höhe angeordnet sind, so daß in jeder Etage insgesamt vier Brücken vorgesehen sind, die den Eckpunkten des Aufzuges gegenüberstehen (Figur 2).

Jede Brücke 9 ist U-förmig ausgebildet, wobei zwei parallele, senkrechte und im Abstand zueinander angeordnete Seitenwände 10 an ihrer oberen Kante über einen ebenen Steg 11 miteinander verbunden sind. Im Bereich der Seitenwände 10 ist jede Brücke 9 um eine horizontale, quer zur Verschieberichtung der Parkpaletten angeordnete Achse 12 verschwenkbar an der Aufnahme 2 angelenkt.

In einer nach oben geschwenkten Ruheposition (Figur 3 in ausgezogenen Linien) ist der Steg 11 schräg nach oben gerichtet, die Brücke 9 ist dadurch soweit aus dem Schacht 5 ausgeschwenkt, daß der Aufzug 6 ungehindert an der hochgeschwenkten Brücke 9 vorbeifahren kann.

In der nach unten geschwenkten Arbeitsposition (strichpunktiert in Figur 3) verläuft der Steg 11 horizontal und schließt sich unmittelbar an die Oberseite der Aufnahme 2 an, so daß die Aufnahme 2 und der Steg 11 zusammen eine Fahrbahn 13 ausbilden. Das der Aufnahme 2 zugewandte Ende 14 der Brücke 9 legt sich dabei an die Unterseite der Aufnahme 2 an und begrenzt dadurch die Schwenkbewegung der Brücke nach unten, in der untersten Stellung ist der Steg 11 horizontal angeordnet. Alternativ dazu kann an der Aufnahme ein Anschlag vorgesehen sein, auf den sich die Brükke horizontal auflegt.

Neben der U-förmigen Brücke 9 ist an der Aufnahme 2 ein Stift 15 senkrecht verschieblich gelagert, der von einer Druckfeder 25 umgeben ist, die sich einerseits an einem aufnahmefesten Lagerbock 16 und andererseits an einem am Stift 15 festgeklemmten Schaltnocken 17 abstützt und dadurch den Stift 15 senkrecht nach oben verschiebt, bis der Schaltnocken 17 an einem weiteren aufnahmefesten Lagerbock 18 anschlägt (Figur 3). In der angehobenen Stellung steht der Stift 15 dabei soweit nach oben über die Aufnahme 2 vor, daß er durch eine Öffnung 19 in einem mit einer Parkpalette 3 verbundenen Teil 20 hindurchragt und dadurch die Parkpalette 3 auf der Aufnahme 2 gegen eine Verschiebung sichert (Figur 3).

Eine an der einen Seitenwand 10 der Brücke 9 drehbar gelagerte Rolle 21 ruht auf dem Schaltnocken 17 auf und verschiebt diesen beim Verschwenken der Brücke 9 in die Arbeitsposition nach unten, so daß gleichzeitig mit dieser Verschwenkung der Stift 15 abgesenkt wird.

Durch die Druckfeder 25 wird dadurch nicht nur der Stift 15 normalerweise in die angehobene Stellung verschoben, sondern diese Druckfeder 25 verschwenkt über den Schaltnocken 17 und die Rolle 21 auch die Brücke 9 in die angehobene Ruheposition. Die Wirkung der Druckfeder 25 kann unterstützt oder ersetzt werden durch ein Gewicht, das am Ende 14 der Brücke 9 angeordnet ist oder durch dieses Ende 14 gebildet wird. Auch ein solches Gewicht führt dazu, daß die Brücke unbeaufschlagt in die obere Stellung verschwenkt wird.

Die Brücke 9 trägt an ihrer Unterseite ein Mitnahmeteil 26, welches von einer parallel zu den Seitenwänden 10 verlaufenden Mittelwand 27 gebildet wird, die einen im wesentlichen rechtwinkligen Ausschnitt 28 aufweist. Dieser Ausschnitt 28 wird durch eine obere, schräg nach oben verlaufende Anlagekante 29 und eine untere, rechtwinklig dazu schräg nach unten verlaufende Anlagekante 30 gebildet.

Am Aufzug ist der Brücke 9 gegenüberliegend ein Mitnehmer 31 drehbar gelagert, der aus zwei spitzwinklig zueinander verlaufenden Armen 32 und 33 besteht. Die Lagerung erfolgt im Bereich der Verbindungsstelle der beiden Arme 32 und 33, die Achse 34 dieser Lagerung verläuft parallel zur Achse 12. Der Mitnehmer 31 ist mittels einer drehbar an dem unteren Arm 33 angelenkten Zugstange 35 zwischen einer Ruhestellung, in welcher der obere Arm 32 unter die Plattform 8 eingeschwenkt ist und im wesentlichen senkrecht steht, und einer Arbeitsstellung verschwenkbar, in welcher der Arm 32 schräg ausgeschwenkt ist, wobei dann der untere Arm 33 senkrecht steht (Figur 3).

In der Ruhestellung, in der sich der obere Arm 32 innerhalb des Umrisses der Plattform 8 befindet, kann der Aufzug ohne Wechselwirkung mit den benachbarten Brücken 9 an den Aufnahmen vorbeifahren.

Wird bei der Abwärtsfahrt (Figur 3) dagegen der Mitnehmer 31 in die Arbeitsstellung ausgeschwenkt, gelangt eine am freien Ende des oberen Armes 32 angeordnete Rolle 36 an der unteren Anlagekante 30 der benachbarten, in Ruheposition stehenden Brücke 9 zur Anlage und verschwenkt diese bei der weiteren Abwärtsfahrt des Aufzuges in Richtung auf die Arbeitsposition der Brücke 3. Diese Verschwenkbewegung erfolgt durch die Abwärtsbewegung des Aufzuges 6 und entgegen der Wirkung der Druckfeder 25 und/oder eines am Ende 14 angreifenden Gewichtes.

Durch diese Verschwenkbewegung gelangt die Brücke 9 mit ihrem vorderen Ende 37 in die Fahrbahn der Plattform 8 des Aufzuges 6. Die Plattform 8 legt sich dabei an das vordere Ende 37 der Brücke 9 an und verschwenkt diese bis in die horizontale Position der Brücke 9, also bis in die Arbeitsposition. Dabei legt sich die Plattform 8 in eine Stufe 38 der Brücke, so daß bei Erreichen der Arbeitsposition der Brücke 9 die Oberkante der Plattform 8 mit der Fahrbahn 13 ausgerichtet ist. Da die Brücke 9 bei Erreichen der Arbeitsposition nicht weiter verschwenkt werden kann, ruht die Plattform 8 des Aufzuges 6 nunmehr auf der Brücke 9 und kann nicht weiter abgesenkt werden. Dieser Vorgang erfolgt in gleicher Weise an allen vier Ecken des Aufzuges, das heißt der Aufzug wird nun an allen vier Ekken durch die entsprechend in Arbeitsposition verschwenkten Brücken getragen. Es ergibt sich ein spaltfreier Übergang von der Plattform über die Brücke zu der benachbarten Aufnahme, und zwar auf beiden Seiten des Aufzuges in gleicher Weise. Der Sicherungsstift 15 ist nach dem Erreichen dieser Endstellung abgesenkt und gibt eine auf der Aufnahme ruhende Parkpalette frei, die in der weiter unten erörterten Weise auf die Plattform des Aufzuges gefahren werden kann.

Nach dem Verfahren der Parkpalette kann der Aufzug nur nach oben entfernt werden, dieser Vorgang wird anhand der Figur 4 erläutert. Durch den nach wie vor ausgeschwenkten Mitnehmer 31, dessen Rolle 36 an der oberen Anlagekante 29 des Mitnahmeteils 26 zur Anlage kommt, und durch die Druckfeder 25 sowie gegebenenfalls eines Gewichtes am Ende 14 wird die Brücke 9 beim Anheben des Aufzuges 6 nach oben bis in die Ruheposition verschwenkt, dabei wird der Stift 15 angehoben und sichert eine auf der Aufnahme stehende Parkpalette. Danach wird der Mitnehmer 31 in die Ruhestellung eingefahren, der Aufzug kann ungehindert an allen Aufnahmen vorbeifahren.

Um die einwandfreie Funktion der Brücke 9 und der Verriegelung zu überwachen, kann ein Mikroschalter 23 an der Aufnahme angeordnet sein, der bei Erreichen der Ruheposition und der Arbeitsposition ein Signal erzeugt und dieses einer Steuerung zuführt. Diese kann überwachen, ob beispielsweise beim Erreichen der gewünschten Endposition am Aufzug alle vier Brücken der benachbarten Aufnahmen in der Arbeitsposition stehen. Sollte dies nicht der Fall sein, kann ein Stopp- und Warnsignal gegeben werden.

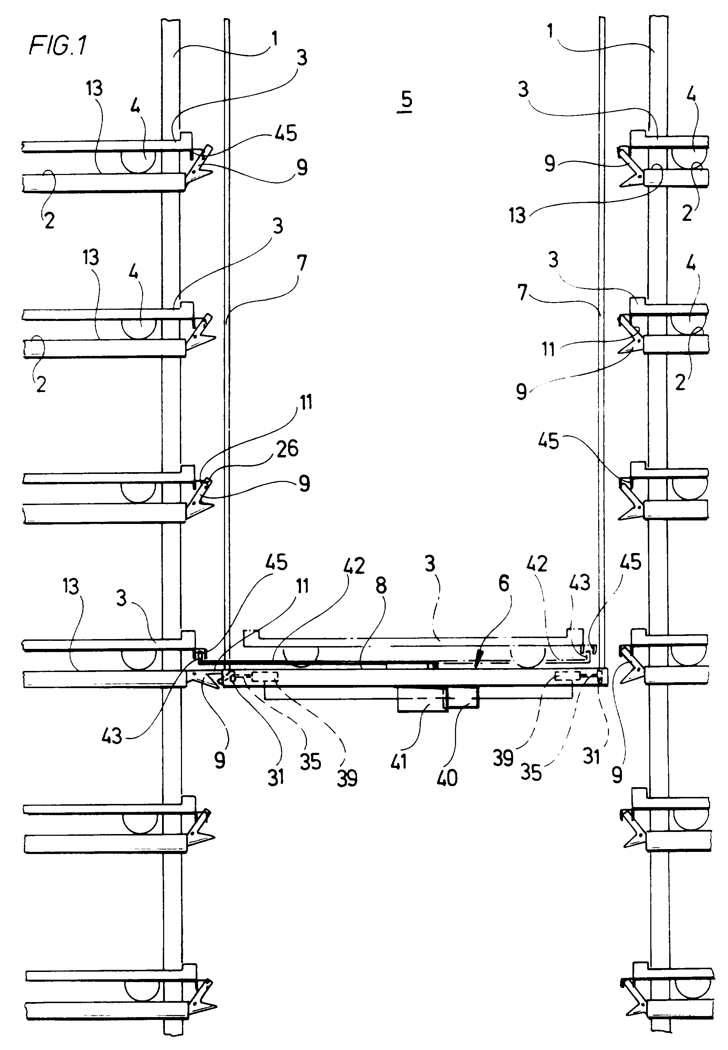

Der Antrieb zum Verschwenken der Mitnehmer 31 von der Ruhestellung in die Arbeitsstellung ist am Aufzug 6 angeordnet. Wie aus der Darstellung der Figuren 1 und 2 zu erkennen ist, sind dort jedem Mitnehmer 31 Motoren 39 zugeordnet, die von einer zentralen Steuerung 40 ihre Steuersignale erhalten. Selbstverständlich könnte auch nur ein einziger Motor am Aufzug vorgesehen sein, der über ein geeignetes Getriebe, Gestänge oder einen Kettentrieb die Antriebskräfte auf die Mitnehmer 31 überträgt. Auf jeden Fall werden durch diesen Antrieb die Mitnehmer immer gleichzeitig und gleichartig bewegt.

Weiterhin befindet sich am Aufzug 6 ein Motor 41 einer Parkpaletten-Verschiebeeinrichtung. Dieser Motor 41 dreht einen Transportarm 42 am Aufzug 6 um eine zentrale, senkrechte Achse. Dieser Transportarm 42 trägt an seinem freien Ende einen Mitnehmer 43 in Form eines nach oben abstehenden Stiftes oder einer um eine senkrechte Achse drehbaren Rolle, die durch die Drehbewegung des Transportarmes 42 längs einer Kreisbahn 44 bewegbar ist. Diese Kreisbahn 44 ragt seitlich über die Kontur der Plattform 8 des Aufzuges 6 hervor und erreicht die Vorderkante der auf den benachbarten Aufnahmen 2 ruhenden Parkpaletten (Figur 2). Jede Parkpalette 3 trägt an ihrer Unterseite eine nach unten und zur Seiten hin offene, im Querschnitt U-förmige oder C-förmige Mitnahmeschiene 45, die von der Mitte der Parkpalette bis zu ihrem einen Ende reicht. Die Seitenwände der Mitnahmeschiene 45 können an dem mittigen Ende trichterförmig aufgebogen sein.

Wenn der Aufzug mit einer Aufnahme 2 ausgerichtet ist und auf den entsprechenden Brücken 9 aufruht, kann eine auf der Aufnahme 2 stehende Parkpalette dadurch auf die Plattform 8 des Aufzuges 6 verfahren werden, daß der Transportarm 42 verschwenkt wird. Dabei tritt der Mitnehmer 43 am mittigen Ende in die Mitnahmeschiene 45 ein, wie dies in Figur 2 bei dem ausgezogen dargestellten Transportarm 42 sichtbar ist. Beim weiteren Verschwenken des Transportarmes 2 bewegt sich der Mitnehmer 43 längs der Mitnahmeschiene 45 und zieht dabei die Parkpalette aus der Aufnahme 2 auf die Plattform 8, bis sich die Parkpalette 3 vollständig auf der Plattform 8 befindet, die Mitnahmeschiene 45 hat dann das gegenüberliegende Ende der Plattform 8 erreicht (in Figur 2 strichpunktiert dargestellt). In dieser Stellung verbleibt der Transportarm 42 und legt somit die Parkpalette auf der Plattform 8 gegen eine seitliche Verschiebung fest; es ist daher möglich, ohne weitere Sicherung den Aufzug zu verfahren, um die Parkpalette anschließend an anderer Stelle abzulegen oder zu be- oder entladen.

Das Verfahren der Parkpalette von der Plattform 8 auf eine benachbarten Aufnahme 2 erfolgt durch umgekehrte Drehung des Transportarmes 42, wobei die Parkpalette 3 nach Erreichen der Endposition auf der Aufnahme 2 durch den Stift 15 gesichert wird.

Der Transportarm 42 kann Parkpaletten von beiden, auf gegenüberliegenden Seiten an den Aufzug grenzenden Aufnahmen verschieben, es genügt also ein einziger Antrieb zum Be- und Entladen des Aufzuges 6 mit einer Parkpalette, die wahlweise von der einen Aufnahme oder von der gegenüberliegenden Aufnahme stammen kann.

Die Mitnahmeschiene 45 muß nicht immer genau in der Mitte der Palette beginnen, sie kann auch zentral an der Palette angeordnet sein, dann ist jedoch die Lagerung des Transportarmes 42 so aus der Mittellage der Plattform 8 verschoben, daß in jedem Fall der Arm 42 dann in die Mitnahmeschiene 45 eingreift, wenn er am weitesten über die Kontur der Plattform 8 vorsteht.

Der beschriebene Antrieb mit Hilfe eines Transportarmes 42 hat den Vorteil, daß durch die Kreisbewegung des Transportarmes die auf die Plattform 8 ausgeübten Beschleunigungskräfte am Anfang der Beschleunigung und am Ende der Beschleunigung gering sind, dazwischen aber ansteigen. Man erhält somit eine sanfte Beschleunigung der Plattform und ein sanftes Abbremsen und kann trotzdem durch die hohen Beschleunigungswerte im Mittelbereich der Bewegung eine kurze Transferzeit erreichen.

## Patentansprüche

1. Parkvorrichtung für Kraftfahrzeuge mit mehreren übereinander angeordneten Aufnahmen für Parkpaletten, mit einem den Aufnahmen benachbarten, jeweils in der Höhe einer Aufnahme arretierbaren Aufzug und mit einem jeweils eine Parkpalette vom Aufzug auf die benachbarte Aufnahme oder in umgekehrter Richtung bewegenden Antrieb, mit einer Brücke zur Überbrückung des Spaltes zwischen Aufzug und benachbarter Aufnahme, die zwischen einer Ruheposition, in der sie die Bewegung des Aufzuges relativ zu den Aufnahmen nicht behindert, und einer Arbeitsposition bewegbar ist, in der sie den Spalt zwischen dem arretierbaren Aufzug und der benachbarten Aufnahme überbrückt, dadurch gekennzeichnet, daß eine Betätigungsvorrichtung (31) für die Brücke (9) an dem Aufzug (6) angeordnet ist, daß die Brücke (9) an der Aufnahme (2) gelagert ist und in der Arbeitsposition in die Bewegungsbahn des Aufzuges (6) hineinragt und daß die Betätigungsvorrichtung einen ausfahrbaren Mitnehmer (31) aufweist, der sich in der ausgefahrenen Stellung an ein die Brücke (9) bewegendes, an der Aufnahme (2) gehaltenes Mitnahmeteil (26) anlegt und dieses durch die Bewegung des Aufzuges (6) verschiebt.

2. Parkvorrichtung nach Anspruch 1, dadurch gekennzeichnet, daß die Brücke (9) in der Arbeitsposition so fixiert ist, daß sich der arretierte Aufzug (6) über die Brücke (9) an der Aufnahme (2) abstützt.

3. Parkvorrichtung nach Anspruch 1 oder 2, dadurch gekennzeichnet, daß das Mitnahmeteil (26) die Brücke (9) nur soweit verschiebt, bis sie in die Bewegungsbahn des Aufzuges (6) eintaucht und daß der Aufzug (6) selbst die Brücke (9) danach bis in eine Endstellung bewegt, in der die Bewegung der Brücke (9) durch einen Anschlag (14, 2) begrenzt ist.

4. Parkvorrichtung nach einem der voranstehenden Ansprüche, dadurch gekennzeichnet, daß die Brücke (9) gegen die Wirkung einer Feder (25) und/oder eines Gewichtes in die Arbeitsposition bewegbar ist.

5. Parkvorrichtung nach einem der voranstehenden Ansprüche, dadurch gekennzeichnet, daß der Mitnehmer (31) beim Entfernen des Aufzuges (6) von der Aufnahme (2) am Mitnahmeteil (26) zur Anlage kommt und durch die Bewegung des Aufzuges (6) über das Mitnahmeteil (26) die Brücke (9) in die Ruheposition verschiebt.

6. Parkvorrichtung nach einem der voranstehenden Ansprüche, dadurch gekennzeichnet, daß der Mitnehmer (31) ein ausschwenkbar am Aufzug (6) gelagerter Hebel (32) ist.

7. Parkvorrichtung nach einem der voranstehenden Ansprüche, dadurch gekennzeichnet, daß das Mitnahmeteil (26) eine mit der Brücke (9) verbundene Kurvenbahn (29, 30) ist.

8. Parkvorrichtung nach Anspruch 7, dadurch gekennzeichnet, daß der Mitnehmer (31) eine an der Kurvenbahn (29, 30) anlegbare Rolle (36) trägt.

9. Parkvorrichtung nach einem der voranstehenden Ansprüche, dadurch gekennzeichnet, daß an der Aufnahme (2) ein Verriegelungselement (15) zur Sicherung einer aufliegenden Parkpalette (3) angeordnet ist, welches zusammen mit der Brücke (9) bewegbar ist.

10. Parkvorrichtung nach Anspruch 9, dadurch gekennzeichnet, daß das Verriegelungselement ein in senkrechter Richtung verschiebbarer Stift (15) ist, der in der Verriegelungsstellung in eine Ausnehmung (19) der Parkpalette (3) eingreift.

11. Parkvorrichtung nach einem der voranstehenden Ansprüche, dadurch gekennzeichnet, daß auf gegenüberliegenden Seiten des Aufzuges (6) jeweils mindestens eine Brücke (9) angeordnet ist.

12. Parkvorrichtung nach einem der voranstehenden Ansprüche, dadurch gekennzeichnet, daß für jede Parkpalette (3) zwei parallel verlaufende Fahrbahnen (13) mit jeweils einer Brücke (9) vorgesehen sind.

13. Parkvorrichtung nach einem der voranstehenden Ansprüche, dadurch gekennzeichnet, daß jeder Brücke (9) ein die Brückenposition überwachender Sensor (Schalter 23) zugeordnet ist.

14. Parkvorrichtung nach einem der voranstehenden Ansprüche, dadurch gekennzeichnet, daß der Antrieb (41, 42, 43, 45) für die Verschiebung der Parkpaletten (3) am Aufzug (6) angeordnet ist.

15. Parkvorrichtung nach Anspruch 14, dadurch gekennzeichnet, daß der Antrieb einen Mitnehmer (43) umfaßt, der auf einer horizontalen Kreisbahn (44) bewegbar ist, die über den Aufzug (6) hervorsteht und deren Durchmesser größer ist als der Verschiebeweg der Parkpalette (3), daß an der Parkpalette (3) ein Anschlag (Schiene 45) für den Mitnehmer (43) vorgesehen ist, der sich quer zur Verschieberichtung der Parkpalette (3) bis zu dem am weitesten über den Aufzug (6) hervorstehenden Teil der Kreisbahn (44) erstreckt, und daß der Anschlag (Schiene 45) auf gegenüberliegenden Seiten des Mitnehmers (43) anliegt.

16. Parkvorrichtung nach Anspruch 15, dadurch gekennzeichnet, daß der Anschlag als nach unten und zur Seiten hin offene Schiene (45) mit U- oder C-Profil ausgebildet ist.

17. Parkvorrichtung nach Anspruch 15 oder 16, dadurch gekennzeichnet, daß die Kreisbahn (44) auf gegenüberliegenden Seiten des Aufzuges (6) in gleicher Weise hervorsteht.

## Claims

1. A parking device for motor vehicles with a plurality of superimposed compartments for parking pallets and having a lift adjacent the compartments which is lockable in each case at the level of a compartment, and having a drive system moving a respective parking pallet from the lift to or from the adjacent compartment, and having a bridge for spanning the gap between the lift and the adjacent compartment which is movable from a position of rest, in which it does not hamper the movement of the lift in relation to the compartments, to an operative position in which it bridges the gap between the lockable lift and the adjacent compartment, **characterised in that** a control device (31) for the bridge (9) is arranged on the lift (6), the bridge (9) is mounted on the compartment (2) and projects in the operative position into the path of movement of the lift (6), and the control device has an extendable carrier system (31) which is placed in the extended position against an entrainment part (26) supported on the compartment (2) and moving the bridge (9), and which displaces the said entrainment part as a result of the movement of the lift (6).

2. A parking device according to Claim 1, **characterised in that** in the operative position the bridge (9) is fixed in such a manner that the locked lift (6) is supported on the compartment (2) by way of the bridge (9).

3. A parking device according to Claim 1 or 2, **characterised in that** the entrainment part (26) only displaces the bridge (9) far enough for it to extend into the path of movement of the lift (6), and the lift (6) itself subsequently moves the bridge (9) into a final position in which the movement of the bridge (9) is restricted by a stop (14, 2).

4. A parking device according to one of the preceding claims, **characterised in that** the bridge (9) is movable into the operative position against the action of a spring (25) and/ or a weight.

5. A parking device according to one of the preceding claims, **characterised in that** the carrier system (31) comes to rest on the entrainment part (26) when the lift (6) is being removed from the compartment (2), and as a result of the movement of the lift (6) it displaces the bridge (9) into the position of rest by way of the entrainment part (26).

6. A parking device according to one of the preceding claims, characterised in that the carrier system (31) is a lever (32) mounted on the lift (6) so as to be outwardly pivotable.

7. A parking device according to one of the preceding claims, **characterised in that** the entrainment part (26) is a curved track (29, 30) connected to the bridge (9).

8. A parking device according to Claim 7, **characterised in that** the carrier system (31) has a roller (36) placeable on the curved track (29, 30).

9. A parking device according to any one of the preceding claims, **characterised in that** a locking member (15) for securing a supported parking pallet (3) is arranged on the compartment (2) and is movable together with the bridge (9).

10. A parking device according to Claim 9, **characterised in that** the locking member is a vertically-displaceable pin (15) which engages in the locking position in a recess (19) of the parking pallet (3).

11. A parking device according to any one of the preceding claims, **characterised in that** at least one respective bridge (9) is arranged on opposing sides of the lift (6).

12. A parking device according to any one of the preceding claims, **characterised in that** two tracks (13) running parallel and each having one bridge (9) are provided for each parking pallet (3).

13. A parking device according to any one of the preceding claims, **characterised in that** a sensor (switch 23) is associated with each bridge (9) and monitors the position thereof.

14. A parking device according to any one of the preceding claims, **characterised in that** the drive system (41, 42, 43, 45) for displacing the parking pallets (3) is arranged on the lift (6).

15. A parking device according to Claim 14, **characterised in that** the drive system comprises a carrier (43) movable on a horizontal circular track (44) which projects beyond the lift (6) and which has a larger diameter than the displacement path of the parking pallet (3), that a stop (rail 45) for the carrier (43) is provided on the parking pallet (3), and the carrier extends transversely to the direction of displacement of the parking pallet (3) right up to that part of the circular track (44) which projects beyond the lift (6) to the greatest extent, and the stop (rail 45) rests against opposing sides of the carrier (43).

16. A parking device according to Claim 15, **characterised in that** the stop is formed as a rail (45) which has a U or C profile and opens downwards and to the sides.

17. A parking device according to Claim 15 or 16, **characterised in that** the projection of the circular track (44) is identical on opposite sides of the lift (6).

## Revendications

1. Dispositif de parking pour véhicules automobiles comportant plusieurs éléments de réception agencés les uns au-dessus des autres pour des palettes de parking, comportant un élévateur voisin des éléments de réception, susceptible d'être arrêté respectivement à la hauteur d'un élément de réception, et comportant un entraînement déplaçant respectivement une palette de parking depuis l'élévateur sur l'élément de réception voisin ou en sens contraire, comportant un pont pour franchir la fente se trouvant entre l'élévateur et l'élément de réception voisin, ledit pont étant susceptible d'être déplacé entre une position de repos dans laquelle il ne gêne pas le mouvement de l'élévateur par rapport aux éléments de réception et une position de travail dans laquelle il franchit la fente se trouvant entre l'élévateur susceptible d'être arrêté et l'élément récepteur voisin, caractérisé en ce qu'un dispositif d'actionnement (31) pour le pont (9) est agencé sur l'élévateur (6), en ce que le pont (9) est monté sur l'élément de réception (2) et fait saillie en position de travail dans la trajectoire de l'élévateur (6), et en ce que le dispositif d'actionnement présente un toc d'entraînement (31) déployable qui, dans la position déployée, prend appui sur un organe d'entraînement (26) retenu sur l'élément de réception (2) et déplaçant le pont (9), et déplace cet organe d'entraînement grâce au mouvement de l'élévateur (6).

2. Dispositif de parking selon la revendication 1, caractérisé en ce que le pont (9) est fixé en position de travail de telle sorte que l'élévateur (6) arrêté prend appui sur l'élément de réception (2) par l'intermédiaire du pont (9).

3. Dispositif de parking selon la revendication 1 ou 2, caractérisé en ce que l'organe d'entraînement (26) déplace le pont (9) seulement jusqu'à ce qu'il plonge dans la trajectoire de l'élévateur (6) et en ce que l'élévateur (6) déplace lui-même le pont (9) ensuite jusque dans une position finale dans laquelle le mouvement du pont (9) est limité par une butée (14, 2).

4. Dispositif de parking selon l'une des revendications précédentes, caractérisé en ce que le pont (9) peut être mû en position de travail à l'encontre de l'effet d'un ressort (25) et/ou de la force d'un poids.

5. Dispositif de parking selon l'une des revendications précédentes, caractérisé en ce que lorsque l'élévateur (6) est éloigné, le toc d'entraînement (31) vient en contact sur l'organe d'entraînement (26) et déplace le pont (9) dans la position de repos grâce au mouvement de l'élévateur (6) par l'intermédiaire de l'organe d'entraînement (26).

6. Dispositif de parking selon l'une des revendications précédentes, caractérisé en ce que le toc d'entraînement (31) peut par exemple être un levier (32) monté pivotant sur l'élévateur (6).

7. Dispositif de parking selon l'une des revendications précédentes, caractérisé en ce que l'organe d'entraînement (31) est une came incurvée (29, 30) reliée au pont (9).

8. Dispositif de parking selon la revendication 7, caractérisé en ce que le toc d'entraînement (31) porte un galet (36) qui est susceptible de prendre appui sur la came incurvée (29, 30).

9. Dispositif de parking selon l'une des revendications précédentes, caractérisé en ce qu'un élément de verrouillage (15) est agencé dans l'élément de réception (2) pour assurer une palette de parking (3) posée, cet élément pouvant être déplacé avec le pont (9).

10. Dispositif de parking selon la revendication 9, caractérisé en ce l'élément de verrouillage est une broche (15) susceptible d'être déplacée en direction verticale, qui s'engage dans la position de verrouillage dans un évidement (19) de la palette de parking (3).

11. Dispositif de parking selon l'une des revendications précédentes, caractérisé en ce qu'au moins un pont (9) est agencé sur des côtés opposés de l'élévateur (6).

12. Dispositif de parking selon l'une des revendications précédentes, caractérisé en ce qu'il est prévu pour chaque palette de parking (3) deux bandes de roulement (13) parallèles avec chacune un pont (9).

13. Dispositif de parking selon l'une des revendications précédentes, caractérisé en ce qu'à chaque pont (9) est associé un palpeur (commutateur 23) qui surveille la position du pont.

14. Dispositif de parking selon l'une des revendications précédentes, caractérisé en ce que l'entraînement (41, 42, 43, 45) pour le déplacement des palettes de parking (3) est agencé sur l'élévateur (6).

15. Dispositif de parking selon la revendication 14, caractérisé en ce que l'entraînement comprend un toc d'entraînement (43) qui est déplaçable sur une trajectoire circulaire (44) horizontale qui fait saillie au-dessus de l'élévateur (6) et dont le diamètre est supérieur au trajet de déplacement des palettes de parking (3), en ce qu'une butée (rail 45) est prévue sur la palette de parking (3) pour le toc d'entraînement (43), cette butée s'étendant transversalement à la direction de déplacement de la palette de parking (3) jusqu'à la partie de la trajectoire circulaire (44) qui fait saillie le plus loin au-dessus de l'élévateur (6), et en ce que la butée (rail 45) est en appui sur des côtés opposés du toc d'entraînement (43).

16. Dispositif de parking selon la revendication 15, caractérisé en ce que la butée est réalisée sous la forme d'un rail (45) à profil en U ou en C, ouvert vers le bas et sur le côté.

17. Dispositif de parking selon la revendication 15 ou 16, caractérisé en ce que la trajectoire circulaire (44) fait saillie de la même manière sur des côtés opposés de l'élévateur (6).
